# EUROPÄISCHE PATENTSCHRIFT

(11) **EP 1 929 243 B1**
(45) Veröffentlichungstag und Bekanntmachung des Hinweises auf die Patenterteilung: **19.10.2011**
(21) Anmeldenummer: 06764324.7
(22) Anmeldetag: 14.08.2006
(51) Int. Cl.: G01C 21/32, G09B 29/10

(54) **VERFAHREN ZUR AKTUALISIERUNG VON DIGITALEN KARTEN**
METHOD FOR UPDATING DIGITAL MAPS
PROCEDE DE MISE A JOUR DE CARTES NUMERIQUES

(30) Priorität: 21.09.2005 DE 102005045020
(43) Veröffentlichungstag der Anmeldung: 11.06.2008
(73) Patentinhaber: ROBERT BOSCH GMBH, 70442 Stuttgart (DE)
(72) Erfinder: NEUKIRCHNER, Ernst-Peter, 31139 Hildesheim (DE)
(86) Internationale Anmeldenummer: PCT/EP2006/065287
(87) Internationale Veröffentlichungsnummer: WO 2007/033873

(56) Entgegenhaltungen:
- EP-A- 1 508 777
- DE-A1- 10 200 375
- DE-A1- 10 318 615
- BASTIAENSEN E. ET AL: "Specification of actualisation strategies, map components version control and interfaces", INTERNET CITATION, [Online] 28 August 2003 (2003-08-28), XP002391250, Retrieved from the Internet: URL:http://www.ertico.com/download/actmap_ public_documents/2_065v11-D31-final.pdf> [retrieved on 2006-07-20]
- BASTIAENSEN E. ET AL: "Specification of actualisation strategies, map components version control and interfaces", INTERNET CITATION, [Online] 28 August 2003 (2003-08-28), XP002391250, Retrieved from the Internet: URL:http://www.ertico.com/download/actmap_ public_documents/2_065v11-D31-final.pdf> [retrieved on 2006-07-20]

## Beschreibung

### Technisches Gebiet

Die Erfindung betrifft ein Verfahren zur Aktualisierung von digitalen Karten.

### Stand der Technik

Aus dem Stand der Technik sind bereits verschiedene Verfahren zur Aktualisierung von Inhalten einer digitalen Karte bekannt so z.B. in der DE 102 00 375 oder in der EP 1 385 102. Letztere beschreibt die Aktualisierung von Daten mit Bezug auf eine einzige vorgegebene Grundversion (baseline version). Eine zweite Aktualisierung nach einer bereits durchgeführten ersten Aktualisierung ist nicht möglich. Die EP 1 385 102 offenbart zudem, dass die Aktualisierung nicht für die gesamte Datenbasis mit einem Mal erfolgen muss, sondern je Datenpartition (Parcel) erfolgt.

Änderungen in der Realität können aber Änderungen über die Grenzen von Datenpartitionen hinweg erfordern, so dass bei Aktualisierung einzelner Partitionen, die Datenbasis in einen zumindest lokal und/oder zeitweise inkonsistenten Zustand kommen kann, wenn nicht gleichzeitig benachbarte Partitionen ebenfalls aktualisiert werden. Durch Abhängigkeiten zwischen jeweils einer oder mehreren Partitionen kann eine Art Lawineneffekt auftreten, durch den die Notwendigkeit der gleichzeitigen Aktualisierung einer großen Zahl von Partitionen entstehen. Die aus dem Stand der Technik bekannten Inkonsistenzen können z.B. bei der Anwendung der Daten für eine Routenberechnung zu Fehlfunktionen und falschen Ergebnissen führen.

Die DE 102 00 375 A1 beschreibt ein Verfahren zur Aktualisierung von digitalen Karten (10), bei welchen geprüft wird, ob Aktualisierungsdaten auf eine Partition angewendet werden können, wobei sich eine Partition in einem Mindestversionsstand befinden muss und wobei alle Operationen einer ersten Transaktion in der Partition ausgeführt werden, wenn dies der Fall ist.

Aus dem Dokument ActMap
(http://www.ertico.com/download/actmap_public_documents/2_065V11-D31-final.pdf) ist ein Verfahren zur Aktualisierung von digitalen Karten bekannt, welches sich mit inkrementellen Kartenaktualisierungen befasst und dabei Aktualisierungstransaktionen für genau eine Partition einer digitalen Karte vornimmt.

### Darstellung der Erfindung, Aufgabe, Lösung, Vorteile

Es ist deshalb Aufgabe der Erfindung, eine Datenbasis zu aktualisieren ohne die Beschränkung des Bezuges auf jeweils eine einzige vorgegebene Baselineversion. Zudem soll die Datenbasis nach jeder ggf. auch nur gebietsweise ausgeführte Aktualisierung in einem konsistenten Zustand verbleiben und für alle Teile der Datenbasis bis zu einem gegebenen Partitionierungsgrad eine Versionierung ermöglicht werden, die den Aktualisierungsstand der jeweiligen Partition definiert.

Gelöst wird diese Aufgabe durch ein Verfahren mit den im Anspruch 1 angegebenen Merkmalen.

Die Grundidee der Erfindung ist es, dass sich Transaktionen entweder ausschließlich auf eine einzige Partition beziehen oder aber auch mehrere Partitionen betreffen. Im ersten Fall können alle Operationen einer Transaktion sofort für die jeweilige Partition durchgeführt und die Transaktion damit abgeschlossen werden, Im zweiten Fall werden zunächst nur die Operationen durchgeführt, die sich auf die jeweilige Partition beziehen. Die auf diese Weise vorgenommenen Änderungen einer noch nicht vollständig ausgeführten Transaktion werden in der geänderten Datenbasis zunächst als vorläufig und damit als noch nicht gültig gekennzeichnet. Mit dieser Kennzeichnung wird auch vermerkt, welche andere Partitionen
ebenfalls noch aktualisiert werden müssen, um die Transaktion vollständig abzuschließen. Erst wenn alle von einer Transaktion betroffenen Partitionen aktualisiert wurden, werden die Vorläufigkeitsvermerke entfernt, so dass die mit der Transaktion verbundenen Änderungen vollständig und konsistent verwendet werden können. Wenn alle für einen Versionsfortschritt notwendigen Transaktionen für eine Partition abgeschlossen wurden, wird diese Partition mit einer dem Aktualitätsstand entsprechenden Versionskennzeichnung versehen.

Auf diese Weise kann eine Aktualisierung inkrementell ständig weitergeführt werden, so dass ein vollständiger Ersatz der digitalen Karte im Prinzip nicht erforderlich ist.

Vorzugsweise werden die Aktualisierungsdaten nicht zur Aktualisierung eingesetzt, wenn in Verfahrensschritt b) die Partition nicht auf ausreichendem Aktualisierungsstand für die Aktualisierung ist. Dies trägt der Tatsache Rechnung, dass schon in Verfahrensschritt b) geprüft wird, ob die Partition auf ausreichendem Aktualisierungsstand für die Aktualisierung ist.

Möglicherweise sind weitere Transaktionen für die aktuelle Partition zu bearbeiten. Es ist daher von Vorteil, dass die Verfahrensschritte c) bis h) erneut eingeleitet werden, wenn die Prüfung in Verfahrensschritt i) ergibt, dass noch weitere Transaktionen für die aktuelle Partition zu bearbeiten sind.

Eine vorteilhafte Ausgestaltung der Erfindung sieht vor, dass die Aktualisierungsdaten für eine Partition den Versionsstand, auf der sich die Partition mindestens befinden muss, damit die Aktualisierung ausgeführt werden sowie eine Liste mit Transaktionen aufweist, wobei jede Transaktion eine Liste der Operationen, die in der Partition ausgeführt werden sollen, und einer Liste der Partitionen, in denen ebenfalls Operationen für diese Transaktion ausgeführt werden sollen, enthält.

Des Weiteren impliziert das erfindungsgemäße Verfahren, dass die aktuelle Version der Partitionen sowie die Liste der bereits vollständig in allen betroffenen Partitionen ausgeführten Transaktionen seit der letzten Vergabe eines neuen Versionskennzeichens sowie die Liste der nur partiell ausgeführten Transaktion und die Identifikation der Partitionen, in denen noch Operationen zur Vervollständigung der Transaktion notwendig sind, gespeichert werden.

Ein Fahrzeuginformationssystem, bei dem eine Aktualisierung von digitalen Karten gegeben ist, ist Gegenstand von Anspruch 6, wonach das Fahrzeuginfbrmationssystem eine Speichervorrichtung für eine digitale Karte und mindestens eine Datenverarbeitungseinrichtung sowie eine Speichereinheit zur Einbringung von Aktualisierungsinfortnationen für die digitale Karte und einen Speicher zur Speicherung eines jeweiligen aktuellen Zustandes verschiedener Teile der digitalen Karte umfasst, wobei das Fahrzeuginformationssystem derart eingerichtet ist, dass eine Aktualisierung von digitalen Karten gemäß einem der Ansprüche 1 bis 5 gegeben ist.

Für die Bedienung oder Informationsausgabe ist es sinnvoll, dass eine Ein-/Ausgabeeinheit gegeben ist.

Es ist möglich, dass das Fahrzeuginformationssystem auch als Navigationssystem Verwendung fmdet. Es ist daher von Vorteil, dass eine Sensorik zur Erfassung der Fahrzeugposition und Bewegung gegeben ist.

Denkbar ist, dass die Speichervorrichtung für die digitale Karte eine Nur-Lese-Speicher ist. Es ist daher von Vorteil, dass ein beschreibbarer Speicher für Änderungsdaten der digitalen Karte gegeben ist.

Für einen reibungslosen Ablauf des Verfahrens gemäß einem der Ansprüche 1 bis 5 sieht eine vorteilhafte Ausgestaltung der Erfindung darüber hinaus vor, dass die Speichereinheit die aktuelle Version jeder Partition sowie jeweils eine Liste der bereits vollständig in den betroffenen Partitionen ausgeführten Transaktionen mindestens seit der letzten Vergabe eines neuen Versionskennzeichens sowie eine Liste der bisher nur partiell ausgeführten Transaktionen und die Identifikationen der Partitionen, in denen noch Operationen zur Vervollständigung der Transaktionen notwendig sind, umfasst.

### Kurzbeschreibung der Zeichnungen

Ausführungsbeispiele der Erfindung werden im Folgenden anhand der Figuren erläutert. Es zeigen in schematischer Darstellung
Fig. den Ablauf des erfindungsgemäßen Verfahrens;
Fig. 2 Fahrzeuginformationssystem gemäß der Erfindung.
Fig. 3 die Abhängigkeit zwischen Partitionen bei der Aktualisierung von Inhalten der digitalen Karte;

### Bester Weg zur Ausführung der Erfindung

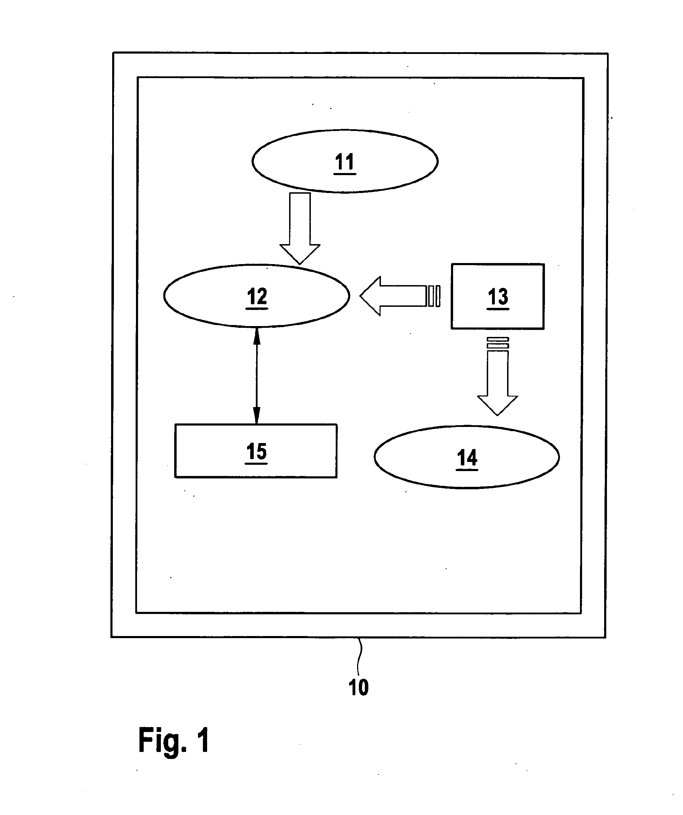

Das in Figur 1 schematisch dargestellte Verfahren dient zur inkrementellen, konsistenten Aktualisierung von digitalen Karten 10. Dazu muss zunächst geprüft werden, ob die Aktualisierungsdaten 11 überhaupt auf die Partition 12 angewendet werden können. Hierzu muss sich die Partition 12 auf einem Mindest-Versionsstand befinden.

Wenn diese Bedingung erfüllt ist, werden alle Operationen der ersten Transaktion 13 in der Partition 12 ausgeführt. Es wird dann geprüft, ob die Transaktion 13 auch andere Partitionen 14 betrifft. Ist dies nicht der Fall, werden die Operationen als gültige Änderungen in der Partition 12 markiert.

Sind andere Partitionen 14 betroffen, wird für diese geprüft, ob die Transaktion 13 dort schon durchgeführt wurde. Wenn ja, wird die aktuelle Partition 12 dort aus der Liste 15 der noch zu bearbeitenden Partitionen gelöscht. Anderenfalls werden die Partitionen 14 in der aktuellen Partition 12 als noch zu bearbeitend eingetragen.

Bleiben dabei noch Partitionen übrig, in denen die Transaktion 13 noch ausgeführt werden muss, werden die durchgeführten Operationen in der aktuellen Partition 12 als noch - nicht - gültig markiert. Anderenfalls können alle Operationen der Transaktion 13 in allen betroffenen Partitionen als gültig markiert werden. Dies wird für alle Transaktionen einer Aktualisierung wiederholt.

Konnten alle Transaktionen der Aktualisierung als abgeschlossen markiert werden, wird das Versionskennzeichen der Partition auf die nächst höhere Version geändert. Dabei müssen die Aktualisierungsdaten 11 für eine Partition den Versionsstand, auf der sich die Partition mindestens befinden muss, damit die Aktualisierung ausgeführt werden kann, sowie einer Liste von Transaktionen aufweisen, wobei jede Transaktion eine Liste der Operationen, die in der Partition ausgeführt werden sollen, und eine Liste der Partitionen, in denen ebenfalls Operationen für diese Transaktion ausgeführt werden sollen, enthalten.

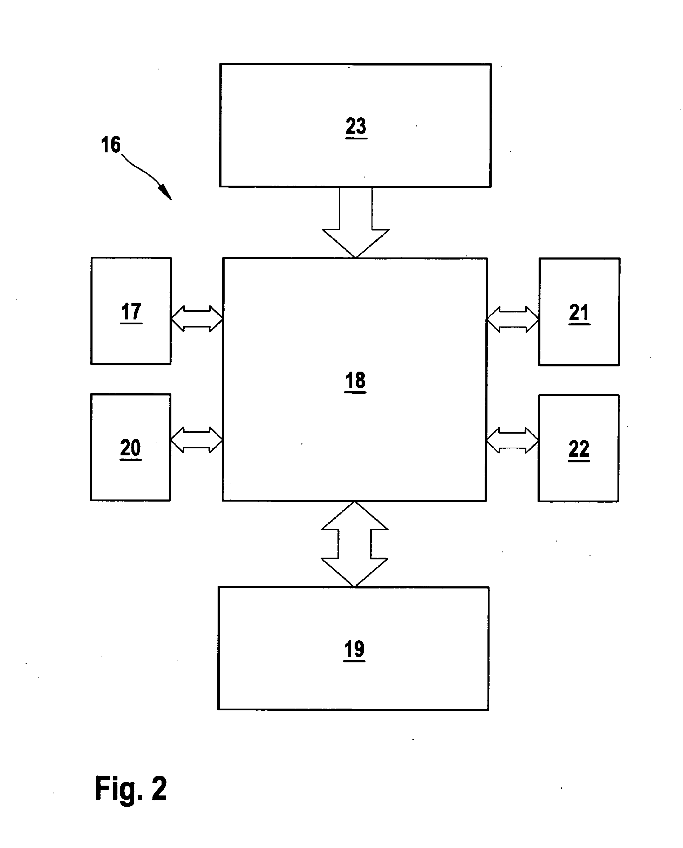

Ein Fahrzeuginformationssystem 16, in dem das erfindungsgemäße Verfahren realisiert wird, zeigt Fig. 2. Das Fahrzeuginformationssystem 16 enthält eine Speichervorrichtung 17 für die digitale Karte 10 und mindestens eine Datenverarbeitungsvorrichtung 18, einen Speicher 19 zur Einbringung von Aktualisierungsinformationen für die digitale Karte 10 und einen Speicher 20 zur Speicherung des jeweiligen aktuellen Zustandes verschiedener Teile der digitalen Karte 10. In dem Fahrzeuginfonmationssystem 16 kann die digitale Karte 10 mittels der Aktualisierungsinformationen ständig auf dem aktuellen Stand gehalten werden. Das Fahrzeuginformationssystem 16 kann weiterhin eine Ein-/AusgabeEinheit 21 zur Bedienung bzw. Informationsausgabe sowie eine Sensorik 22 zur Erfassung der Fahrzeugposition und bewegung enthalten, sofern das Informationssystem auch als Navigationssystem Anwendung findet. Weiterhin kann in dem Fahrzeuginformationssystem ein beschreibbarer Speicher 23 für Änderungsdaten der digitalen Karte 10 vorhanden sein, beispielsweise wenn der Speicher ein Nur-Lese-Speicher ist.

Die Einheit zur Einbringung von Aktualisierungsinformationen kann ein Laufwerk für einen Wechseldatenträger (z.B. CD, DVD) sein oder eine Einschubvorrichtung für Speicherkarten. Denkbar ist auch eine Empfangseinrichtung für eine drahtlose Datenübertragung.

Digitale Karten 10 für ein Fahrzeuginformationssystem mit einem integrierten Navigationssystem sind im Fahrzeug üblicher Weise auf nicht-flüchtigen Datenträgern gespeichert (CD, DVD, Harddisc, Flash-Memory-Cards).

Die Daten werden dort meist Gebietsweise partitioniert, um sie den Anforderungen der Applikationssoftware entsprechend in den Arbeitsspeicher laden zu können. Die Gebiete, die die einzelnen Partitionen abdecken können, haben regelmäßige oder unregelmäßige Formen. Hier wird im Weiteren vorausgesetzt, dass eine regelmäßige Teilung vorliegt. Eine solche Teilung kann z.B. durch Festlegung konstanter geographischer Längen- und Breitenwerte für die Begrenzungen für die Partition vorgenommen werden. Die Größe der durch die Partitionen 12, 14 abgedeckten Gebiete kann variieren. Solange sie der hier beschriebenen Aktualisierung unterliegen, dürfen sich die Gebietsgrößen der Partition 12,14 jedoch nicht ändern.

Die Daten von Partitionen 12, 14 sind häufig nochmals thematisch in logische Blöcke (Layer) unterteilt. So können z.B. Daten, die für eine Routenberechnung verwendet werden, logisch getrennt von denen abgespeichert sein, die für die Positionsbestimmung, Zielführung oder eine Kartendarstellung benötigt werden. Das erfindungsgemäße Verfahren zur Aktualisierung kann sich sowohl auf gebietsweise Partitionen als auch auf ihre Unterteilungen in logische Blöcke beziehen.

Zum Zwecke einer Kartendarstellung oder zur Berechnung von Routen sind Karten häufig auch in verschiedenen Generalisierungsebenen mehrfach abgespeichert, wobei die Partitionen 12, 14 der stärker generalisierten Ebenen größere Gebiete abdecken, als die Partitionen 12, 14 der darunter liegenden Ebenen. Zumeist entspricht das Gebiet einer Partition 12, 14 auf einer höheren Ebene genau der Summe der Gebiete einer Anzahl von Partitionen 12, 14 der darunter liegenden Ebenen.

Bei der Aktualisierung von Inhalten der digitalen Karte 10 ist zu beachten, dass zwischen den Inhalten von unterschiedlichen Partitionen 12, 14, Ebenen und Layern vielfältige Abhängigkeiten bestehen können. Änderungen eines Straßenabschnittes, der sich über mehrere Partitionen 12, 14 erstreckt, verursacht Änderungen mindestens in den Partitionen 12, 14 der untersten Ebene, kann aber auch Partitionen 12, 14 höherer Ebenen betreffen und auf allen betroffenen Ebenen wiederum verschiedenen Layer betreffen (z.B. Daten zur Zielauswahl, Zielführung und Kartenanzeige bei Namensänderungen, Daten zur Positionsbestimmung und Kartenanzeige bei Geometrieänderungen).

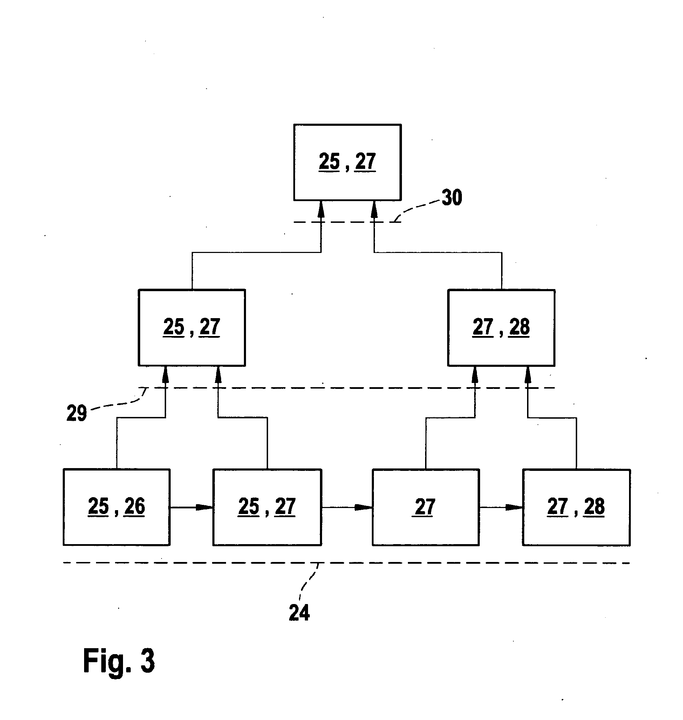

Die Abhängigkeit zwischen Partitionen 12, 14 zeigt Figur 3. Auf der untersten Ebene 24 sind vier Änderungen in der Realität durch vier Transaktionen 25, 26, 27, 28 umzusetzen. Die Transaktion 25 erstreckt sich über die beiden linken Partitionen und verursacht auch Änderungen in den beiden nächst höheren Ebenen. Die Transaktion 26 betrifft nur die linke Partition auf der untersten Ebene und kann deshalb unabhängig von Änderungen in anderen Partitionen durchgeführt und abgeschlossen werden. Die Transaktion 27 erstreckt sich über drei Partitionen, und hat ebenfalls Änderungen auf den oberen Ebenen 29, 30 zur Folge, wobei auf der ersten Ebene zwei Partitionen betroffen sind. Obwohl die Transaktion 28 auf unterster Ebene 24 nur eine Partition betrifft, kann sie aber erst abgeschlossen werden, wenn sie in der nächst höheren Ebene 29 ebenfalls durchgeführt wurde.

Aktualisierungen der digitalen Karte 10 erstrecken sich zumeist in unregelmäßiger Verteilung über das gesamte abgedeckte Gebiet. Um die Karte vollständig zu aktualisieren, müssen eine Vielzahl von Partitionen 12, 14 geändert werden. Erfolgt die Aktualisierung per Funkverbindung und ggf. auch während der Fahrt muss aufgrund der für die Übertragung zur Verfügung stehenden Bandbreite sowie eventuell auftretender Verbindungsunterbrechungen besondere Maßnahmen vorgesehen werden, um die Datenbasis jederzeit in einem konsistenten Zustand zu halten. Es sollte aber auch vermieden werden, Aktualisierungen erst dann wirksam werden zu lassen, wenn sie vollständig übertragen und vorgenommen wurden, da aufgrund des Fahrzeugeinsatzes Änderungen oft nur regional begrenzt benötigt werden. Dazu dient gerade das in Fig. 1 vorgestellte erfindungsgemäße Verfahren.

## Patentansprüche

1. Verfahren zur Aktualisierung von digitalen Karten (10) mit den folgenden Verfahrensschritten:
a.) Prüfung, ob Aktualisierungsdaten (11) auf eine Partition (12) angewendet werden können, wobei sich die Partition (12) hierzu auf einem Mindestversionsstand befinden muss,
b.) Ausführung aller Operationen einer ersten Transaktion (13) in der Partition (12), sofern Verfahrensschritt a) erfüllt ist,
**gekennzeichnet durch** die folgenden, weiteren Verfahrensschritte:
c.) Prüfung, ob die Transaktion (13) auch andere Partitionen (14) betrifft, wobei die Operationen der Transaktion (13) als gültige Änderungen in der Partition (12) markiert werden, wenn die Transaktion (13) nicht andere Partitionen (14) betrifft.
d.) Sind andere Partitionen (14) betroffen, Prüfung, ob die Transaktion (13) dort schon durchgeführt wurde, wobei die aktuelle Partition (12) dort aus der Liste (15) der noch zu bearbeitenden Partitionen gelöscht wird, wenn die Transaktion (13) dort schon durchgeführt wurde,
e.) Eintragung der Partitionen (14) in der aktuellen Partition (12) als noch zu bearbeitend, wenn die Transaktion (13) andere Partitionen (14) betrifft und in anderen Partitionen (14) noch nicht durchgeführt wurde,
f.) Markierung der durchgeführten Operationen in der aktuellen Partition (12) als noch-nicht-gültig, sofern Partitionen übrig bleiben, in denen die Transaktion (13) noch ausgeführt werden muss,
g.) Markierung aller Operationen der Transaktion (13) in allen betroffenen Partitionen als gültig, sofern keine Partitionen übrig bleiben, in denen die Transaktion (13) noch ausgeführt werden muss,
h.) Wiederholung der Verfahrensschritte f) und g) für alle Transaktionen einer Aktualisierung,
i.) Änderung der Versionskennzeichen der Partition auf die nächsthöhere Version, sofern alle Transaktionen der Aktualisierung als abgeschlossen markiert werden konnten, wobei die Aktualisierungsdaten (11) für eine Partition den Versionsstand, auf der sich die Partition mindestens befinden muss, damit die Aktualisierung ausgeführt werden kann, sowie eine Liste von Transaktionen aufweisen muss und jede Transaktion eine Liste der Operationen, die in der Partition ausgeführt werden sollen, und eine Liste der anderen Partitionen (14), in denen ebenfalls Operationen für diese Transaktion ausgeführt werden sollen, enthält.

2. Verfahren nach Anspruch 1, **dadurch gekennzeichnet, dass** die aktuelle Version der Partition (12; 14) sowie einer Liste der bereits vollständig in allen betroffenen Partitionen ausgeführten Transaktionen seit einer letzten Vergabe eines neuen Versionskennzeichens sowie einer Liste der bisher nur partiell ausgeführten Transaktion und die Identifikation der Partitionen (12, 14), in denen noch Operationen zur Vervollständigung der Transaktion notwendig sind, gespeichert werden.

3. Fahrzeuginformationssystem, bei dem eine Aktualisierung von digitalen Karten gegeben ist, **dadurch gekennzeichnet, dass** das Fahrzeuginformationssystem eine Speichervorrichtung (17) für eine digitale Karte (10) und mindestens eine Datenverarbeitungsvorrichtung (18) sowie eine Speichereinheit (19) zur Einbringung von Aktualisierungsinformationen für die digitale Karte (10) und einen Speicher (20) zur Speicherung eines jeweiligen aktuellen Zustandes verschiedener Teile der digitalen Karte (10) umfasst, wobei das Fahrzeuginformationssystem (16) derart eingerichtet ist, dass eine Aktualisierung von Karten (10) gemäß einem der Ansprüche 1 oder 2 erfolgt.

4. Fahrzeuginformationssystem nach Anspruch 3, **dadurch gekennzeichnet, dass** eine Ein-/Ausgabeeinheit (21) zur Bedienung oder Informationsausgabe gegeben ist.

5. Fahrzeuginformationssystem nach Anspruch 3 oder 4, **dadurch gekennzeichnet, dass** eine Sensorik (22) zur Erfassung der Fahrzeugposition und Bewegung gegeben ist.

6. Fahrzeuginformationssystem nach einem der Ansprüche 3 bis 5, **dadurch gekennzeichnet, dass** ein beschreibbarer Speicher (23) für Änderungsdaten der digitalen Karte (10) gegeben ist.

7. Fahrzeuginformationssystem nach einem der Ansprüche 3 bis 6, **dadurch gekennzeichnet, dass** die Speichereinheit (19) eine aktuelle Version jeder Partition (12, 14) sowie jeweils eine Liste der bereits vollständig in den betroffenen Partitionen ausgeführten Transaktionen mindestens seit der letzten Vergabe eines neuen Versionskennzeichens sowie einer Liste der bisher nur partielle ausgeführten Transaktionen und die Identifikationen der Partitionen (12, 14), in denen noch Operationen zur Vervollständigung der Transaktionen notwendig sind, umfasst.

## Claims

1. Method for updating digital maps (10), having the following method steps:
a) checking whether update data (11) can be applied to a partition (12), wherein the partition (12) must be at a minimum version status for this purpose,
b) execution of all the operations of a first transaction (13) in the partition (12) if method step a) is satisfied,
**characterized by** the following further method steps:
c) checking whether the transaction (13) also relates to other partitions (14), wherein the operations of the transaction (13) are marked as valid changes in the partition (12) if the transaction (13) does not relate to other partitions (14),
d) if other partitions (14) are affected, checking whether the transaction (13) has already been carried out there, wherein the current partition (12) is deleted there from the list (15) of the partitions which are still to be processed if the transaction (13) has already been carried out there,
e) entry of the partitions (14) in the current partition (12) as still to be processed if the transaction (13) relates to other partitions (14) and has not yet been carried out in other partitions (14),
f) marking of the operations which have been carried out in the current partition (12) as not yet valid if there are partitions remaining in which the transaction (13) still has to be carried out,
g) marking of all the operations of the transaction (13) in all the affected partitions as valid if there are no partitions remaining in which the transaction (13) still has to be carried out,
h) repetition of the method steps f) and g) for all the transactions of an update,
i) changing of the version identifiers of the partition to the next highest version if it has been possible to mark all the transactions of the update as terminated, wherein the update data (11) for a partition must have the version status at which the partition at least has to be located for the update to be able to be carried out, and a list of transactions, and each transaction contains a list of the operations which are to be carried out in the partition, and a list of the other partitions (14) in which operations for this transaction are also to be carried out.

2. Method according to Claim 1, **characterized in that** the following are stored: the current version of the partition (12, 14) and of a list of the transactions which have already been completely carried out in all the affected partitions since a new version identifier was last assigned, as well as of a list of the transaction carried out only partially until now and the identification of the partitions (12, 14) in which operations for completing the transaction are still necessary.

3. Vehicle information system in which updating of digital maps is provided, **characterized in that** the vehicle information system comprises a storage device (17) for a digital map (10) and at least one data processing device (18) together with a storage unit (19) for inputting update information for the digital map (10), and a memory (20) for storing a respective current state of various parts of the digital map (10), wherein the vehicle information system (16) is configured in such a way that the updating of maps (10) takes place according to one of Claims 1 or 2.

4. Vehicle information system according to Claim 3, **characterized in that** an input/output unit (21) for controlling or outputting information is provided.

5. Vehicle information system according to Claim 3 or 4, **characterized in that** a sensor system (22) for sensing the position of the vehicle and movement is provided.

6. Vehicle information system according to one of Claims 3 to 5, **characterized in that** a memory (23) which can be written to is provided for modification data relating to the digital map (10).

7. Vehicle information system according to one of Claims 3 to 6, **characterized in that** the memory unit (19) comprises a current version of each partition (12, 14) and in each case a list of the transactions which have already been completely carried out in the affected partitions at least since a new version identifier was last assigned, as well as of a list of the transactions carried out only partially until now and the identifications of the partitions (12, 14) in which operations for completing the transactions are still necessary.

## Revendications

1. Procédé d'actualisation de cartes numériques (10) comprenant les étapes suivantes :
a) Vérification si les données d'actualisation (11) peuvent être utilisées sur une partition (12), la partition (12) devant se trouver à cet effet sur une version minimale,
b) Exécution de toutes les opérations d'une première transaction (13) dans la partition (12), sous réserve que l'étape a) du procédé a été accomplie,
**caractérisé par** les étapes supplémentaires suivantes :
c) Vérification si la transaction (13) concerne également d'autres partitions (14), les opérations de la transaction (13) étant marquées comme des modifications valides de la partition (12) lorsque la transaction (13) ne concerne pas d'autres partitions (14),
d) si d'autres partitions (14) sont concernées, Vérification si la transaction (13) y a déjà été exécutée, la partition actuelle (12) y étant effacée de la liste (15) des partitions restant à traiter si la transaction (13) y a déjà été exécutée,
e) Insertion des partitions (14) dans la partition actuelle (12) comme restant à traiter si la transaction (13) concerne d'autres partitions (14) et n'a pas encore été exécutée dans les autres partitions (14),
f) Marquage des opérations effectuées dans la partition actuelle (12) comme pas encore valides, sous réserve qu'il reste des partitions dans lesquelles la transaction (13) doit encore être exécutée,
g) Marquage de toutes les opérations de la transaction (13) dans toutes les partitions concernées comme étant valides, sous réserve qu'il ne reste aucune partition dans laquelle la transaction (13) doit encore être exécutée,
h) Répétition des étapes f) et g) du procédé pour toutes les transactions d'une actualisation,
i) Modification des identifiants de version de la partition pour passer à la version immédiatement supérieure, sous réserve que toutes les transactions de l'actualisation peuvent être marquées comme étant achevées, les données d'actualisation (11) pour une partition devant présenter le niveau de version auquel doit au moins se trouver la partition pour que l'actualisation puisse être effectuée ainsi qu'une liste des transactions, et chaque transaction contenant une liste des opérations qui doivent être exécutées dans la partition ainsi qu'une liste des autres partitions (14) dans lesquelles doivent également être exécutées des opérations pour cette transaction.

2. Procédé selon la revendication 1, **caractérisé en ce que** la version actuelle de la partition (12, 14) ainsi qu'une liste des transactions déjà entièrement exécutées dans toutes les partitions concernées depuis une dernière attribution d'un nouvel identifiant de version ainsi qu'une liste des transactions seulement exécutées partiellement jusqu'à présent et l'identification des partitions (12, 14) dans lesquelles des opérations sont encore nécessaires pour achever la transaction sont enregistrées.

3. Système d'information de véhicule avec lequel il existe une actualisation de cartes numériques, **caractérisé en ce que** le système d'information de véhicule comprend un dispositif de mémorisation (17) pour une carte numérique (10) et au moins un dispositif de traitement de données (18) ainsi qu'une unité de mémorisation (19) pour entrer des informations d'actualisation pour la carte numérique (10) et une mémoire (20) pour mémoriser un état actuel correspondant de différentes parties de la carte numérique (10), le système d'information de véhicule (16) étant configuré de telle sorte que l'actualisation des cartes (10) s'effectue conformément à l'une des revendications 1 ou 2.

4. Système d'information de véhicule selon la revendication 3, **caractérisé en ce qu'**il existe une unité d'entrée/sortie (21) pour la commande ou la diffusion d'informations.

5. Système d'information de véhicule selon la revendication 3 ou 4, **caractérisé en ce qu'**il existe un dispositif de détection (22) pour détecter la position du véhicule et le mouvement.

6. Système d'information de véhicule selon l'une des revendications 3 à 5, **caractérisé en ce qu'**il existe une mémoire inscriptible (23) pour les données de modification de la carte numérique (10).

7. Système d'information de véhicule selon l'une des revendications 3 à 6, **caractérisé en ce que** l'unité de mémorisation (19) comprend une version actuelle de chaque partition (12, 14) ainsi qu'une liste des transactions déjà entièrement exécutées dans les partitions concernées au moins depuis la dernière attribution d'un nouvel identifiant de version ainsi qu'une liste des transactions seulement exécutées partiellement jusqu'à présent et les identifications des partitions (12, 14) dans lesquelles des opérations sont encore nécessaires pour achever la transaction.
